# EUROPÄISCHE PATENTANMELDUNG

(11) **EP 0 736 739 A2**
(43) Veröffentlichungstag der Anmeldung: **09.10.1996**
(21) Anmeldenummer: 96105153.9
(22) Anmeldetag: 30.03.1996
(51) Int. Cl.: F26B 3/00, C02F 11/12, C02F 11/18

(54) **Verfahren zur Verwertung von Schlämmen und wasserhaltigen Rückständen mit hohem Anteil organischer Substanzen**

(30) Priorität: 04.04.1995 DE 19512563
(71) Anmelder: DEUTAG AG, D-50679 Köln (DE)
(72) Erfinder: Mohmeyer, Heinrich, 31061 Alfeld (DE); Mohr, Andreas, 63654 Büdingen (DE); Kott, Wilhelm, 44787 Bochum (DE); Kriegel, Manfred, 59519 Möhnesee (DE)
(74) Vertreter: Werner, Hans-Karsten, Dr.Dipl.-Chem.

(57) **Zusammenfassung**

Das Verfahren zur Verwertung von Schlämmen und wasserhaltigen Rückständen mit hohem Anteil organischer Substanzen durch Trocknung und Weiterverarbeitung zu trockenen, rieselfähigen Produkten sowie einem wäßrigen Kondensat, wobei ein Teil des getrockneten Produkts zurückgeführt wird, um die Trocknung bei Trockensubstanzwerten über 50 Gew.-% beginnen zu können besteht darin, daß die Trocknung durch indirekte Beheizung erfolgt und die Energie zur Trocknung überwiegend oder ausschließlich gewonnen wird durch Verbrennung von kontaminiertem und/oder nicht kontaminiertem Holz und/oder Holzabfällen in einer Brennkammer.

## Beschreibung

Gegenstand der vorliegenden Erfindung ist ein Verfahren zur Verwertung von Schlämmen und wasserhaltigen Rückständen mit hohem Anteil organischer Substanzen durch Trocknung und Weiterverarbeitung zu trockenen, rieselfähigen Produkten sowie einem wäßrigen Kondensat, wobei ein Teil des getrockneten Produkts zurückgeführt wird, um die Trocknung bei Trockensubstanzwerten über 50 Gew.-% beginnen zu können.

Aus der DE-C-43 01 091 ist bekannt, die stoffliche und energetische Klärschlammverwertung über die Erzeugung nachwachsender Rohstoffe durchzuführen, wobei auf Klärschlamm gedüngten Feldern Pflanzen angebaut und zur Energieerzeugung verwendet werden sollen, und wobei mit dieser Energie dann der Klärschlamm getrocknet werden soll. Als nachwachsender Rohstoff werden unter anderem dabei auch Holz oder Holzreste genannt.

Aus der DE-C-39 02 446 ist ein Verfahren zur Trocknung von Schlamm bekannt, bei dem in einem Fließbett trockener und mit Hilfe einer fluidisierten, indirekt beheizten Sandschicht eine Trockensubstanz entsteht, die aus den Abgasstrom wieder abgetrennt wird. Die Abgase der indirekten Heizung für den Sand können dabei teilweise in die Brennkammer rezirkuliert werden. Die Trockensubstanz enthält somit stets erhebliche Mengen an Sand. Es findet sich jedoch kein Hinweis darauf, wie man die zum Teil stark geruchsbelästigenden Brüden entsorgen bzw. verwerten soll.

Es ist weiterhin bekannt, Schlämme, insbesondere Klärschlämme ohne Zusätze zu trocknen und zu trockenen, rieselfähigen Produkten zu verarbeiten. Der bei der Trocknung anfallende Wasserdampf wird dabei im allgemeinen kondensiert und dem Abwasser zugeführt.

Bei der Trocknung von Klärschlämmen ohne Zusätze besteht das Problem, daß bei der Trocknung in Trockensubstanzbereichen zwischen 25 und 55 Gew.-% eine sogenannte kritische Leimphase durchlaufen wird, die verfahrenstechnisch kaum zu bewältigen ist. Es ist daher üblich, dem zu trocknenden Schlamm soviel bereits getrocknetem Schlamm beizumischen, daß von vornherein die Trocknung bei Trockensubstanzwerten über 50 Gew.-% begonnen werden kann.

Dieses Verfahren ist unter dem Namen "Alfelder-Modell" bekannt geworden und hat sich auch prinzipiell bewährt. Ein Nachteil dieses Verfahren ist die gelegentlich auftretende Geruchsbelästigung. Der Energiebedarf für dieses Verfahren wird im allgemeinen gedeckt durch Verbrennung des bei der Schlammfaulung anfallenden Faulgases oder andere Primärenergie.

Das bekannte Verfahren führt somit zwar zu einer weitgehenden Beseitigung des Klärschlamms, wobei auch noch eine gewisse Menge an brauchbarer Abwärme anfällt. Insbesondere bei Vorliegen von nicht kontaminierten Klärschlämmen ist es jedoch nicht möglich, die anfallenden getrockneten, rieselfähigen Produkte als Düngemittel einzusetzen, da sie als Brennmaterial für die Durchführung des Verfahrens benötigt werden.

Die Erfindung hat sich die Aufgabe gestellt, das bekannte Verfahren dahingehend zu verbessern, daß aus dem Klärschlamm mehr verwertbare Produkte gewonnen werden, und zwar bei Verwendung von nicht kontaminiertem Ausgangsmaterial Düngemittel und bei Verwendung von kontaminierten Schlämmen Brennstoffe, die auch für andere Zwecke verwertet werden können als nur die Entsorgung von Klärschlamm.

Weiterhin hat sich die Erfindung die Aufgabe gestellt, die Geruchsbelästigung zu minimieren bzw. völlig zu beseitigen.

Schließlich hat die Erfindung sich die Aufgabe gestellt, nicht nur Klärschlämme, sondern auch andere Schlämme wie Industrieschlämme oder wasserhaltige Rückstände mit hohem Anteil organischer Substanzen wie Hühnerkot und Gülle zu verwerten. Dabei sollen nach Möglichkeit weiteres bisher schwer verwertbares Abfallmaterial der Verwertung zugeführt werden.

Diese Aufgabe konnte jetzt dadurch gelöst werden, daß die Trocknung durch indirekte Beheizung erfolgt und die Energie zur Trocknung überwiegend oder ausschließlich gewonnen wird durch Verbrennung von kontaminiertem und/oder nicht kontaminiertem Holz und/oder Holzabfällen in einer Brennkammer. Dabei erfolgt die Trocknung in einem geschlossenen System. Die dabei anfallenden Restbrüden der Trocknung werden in die Brennkammer hinter der Verbrennungszone eingeleitet.

Das Holz und/oder die Holzabfälle werden vorzugsweise geschreddert auf eine Kantenlänge von ca. 5 cm. Vorzugsweise werden sie in einer Unterschubfeuerung verbrannt, die wesentlich leichter zu regeln ist als die vielfach zur Verbrennung von Holz und Holzabfällen noch immer eingesetzten Schüttfeuerungen. Die erfindungsgemäß vorzugsweise eingesetzte Unterschubfeuerung ist hingegen in der Lage, Holz und Holzabfälle von einer Kantenlänge bis ca. 5 cm einwandfrei zu verbrennen. Die Unterschubfeuerung kann aber auch problemlos mit Holzstaub und Sägemehl befeuert werden.

Ein wesentlicher Vorteil des erfindungsgemäßen Verfahrens besteht darin, daß auch kontaminiertes Holz und/oder kontaminierte Holzabfälle verwertet werden können. Es ist dann allerdings erforderlich, die Abgase zu entstauben und über trockene Absorbentien zu reinigen. Aus ökologischen Gründen ist es selbstverständlich auch zu empfehlen, diese Maßnahme durchzuführen bei der Verbrennung von nicht kontaminiertem Holz und nicht kontaminierten Holzabfällen.

Als Holzabfälle können beispielsweise auch Holzhackschnitzel, Holz aus Abbrucharbeiten wie Dachstühlen, alte Spannplatten, alte Möbel, Fenster und Türen verwertet werden. Das Holz und die Holzabfälle werden somit erfindungsgemäß energetisch verwertet. Der Verbrennungsstaub und die verbrauchten trockenen Absorbentien können im allgemeinen dem trockenen, rieselfähigen Produkt beigemischt werden. Dabei ist allerdings darauf zu achten, daß bei der Herstellung von Düngemitteln nicht durch die Verbrennung von stark kontaminiertem Holz oder Holzabfällen eine unerwünschte Kontaminierung der Düngemittel erfolgt. Es ist aber selbstverständlich möglich, den Verbrennungsstaub und die verbrauchten trockenen Absorbentien solchen trockenen, rieselfähigen Produkten beizumischen, die aufgrund des eingesetzten kontaminierten Schlamms sowieso zu trockenem Brennstoff verarbeitet werden,

Der erfindungsgemäß anfallende trockene Brennstoff kann problemlos verwertet werden in Kraftwerken, Zementwerken und Asphaltmischanlagen. Der Brennwert von getrocknetem Klärschlamm liegt meistens im Bereich zwischen 50 und 70 % des Brennwerts von Braunkohlenstaub. Sofern dies als Brennmaterial zuwenig ist, kann der erfindungsgemäß hergestellte trockene Brennstoff zumindest mit anderen trockenen Brennstoffen vermischt zum Einsatz kommen. Der höhere Gehalt an Asche der erfindungsgemäß hergestellten trockenen Brennstoffe aus Klärschlamm wird bei den genannten Verwertungsmöglichkeiten eingebunden in den Zement oder den Asphalt. Bei der Verbrennung in Kraftwerken findet sich dieser höhere Aschegehalt dann in der sowieso anfallenden Kraftwerksasche wieder.

Ein besonderer Vorteil des erfindungsgemäßen Verfahrens ist, daß außer Klärschlämmen wie Faulschlamm, Frischschlamm und Industrieschlamm aus industriellen Kläranlagen auch wasserhaltige Rückstände mit hohem Anteil organischer Substanzen verarbeitet werden können, wobei diese bei entsprechend geringer Kontamination als Düngemittel einsetzbar sind. Zu derartigen wasserhaltigen Rückständen mit hohem Anteil organischer Substanzen zählen beispielsweise Hühnerkot und Gülle. Gülle läßt sich beispielsweise durch Fällungsmittel auftrennen in eine dünnflüssige, wäßrige Komponente und eine Komponente mit hohem Feststofgehalt, die sich erfindungsgemäß gut zu trockenen, rieselfähigen Produkten verarbeiten läßt, die dann problemlos und zu jeder Jahreszeit als Düngemittel eingesetzt werden können.

Da das erfindungsgemäße Verfahren als geschlossenes System arbeitet, kann auch die flüssige Phase der Gülle verdampft und überwiegend als Kondensat wiedergewonnen werden. Die geruchsbelästigenden Restbrüden werden erfindungsgemäß in die Brennkammer hinter der Verbrennungszone eingeleitet und dabei vollständig desodoriert. Das gleiche gilt für die Verarbeitung von Hühnerkot, der wie Klärschlamm oder gegebenenfalls auch zusammen mit nicht kontaminiertem Klärschlamm zu einem wertvollen Dünger verarbeitet werden kann.

Von entscheidender Bedeutung für alle Varianten des erfindungsgemäßen Verfahrens ist, daß die Trocknung durch indirekte Beheizung erfolgt und es daher möglich ist, die Trocknung in einem geschlossenen System durchzuführen, aus dem keine unerwünschten Geruchsbelästigungen entweichen können.

Die Verbrennung des Holzes und der Holzabfälle in der Brennkammer erfolgt vorzugsweise so, daß die Abgase eine Temperatur zwischen 900 und 1.000°C aufweisen. Sie werden dazu benutzt, Dampf auf 500 bis 600°C zu erwarmen. Dieser Dampf wird dann in die Trockentrommel eingeleitet. Der Dampf verläßt die Trockentrommel bei Temperaturen zwischen 100 und 140°C und wird nach Abscheidung von Feststoffen und Verunreinigungen im Kreislauf wieder aufgeheizt. Aus Materialkostengründen und zur Steigerung der Effizienz des Wärmeaustausches erfolgt dies vorzugsweise in zwei hintereinander geschalteten Wärmeaustauschern im Gegenstrom. Die Abgase aus der Brennkammer verlassen den zweiten Wärmeaustauscher im Temperaturbereich zwischen 170 und 190°C und werden nach der gegebenenfalls erfolgten Entstaubung in den Kamin geleitet. Die Brüden werden mit Luft gekühlt und kondensiert. Die Restbrüden werden zurückgeleitet in die Brennkammer, und zwar hinter der Verbrennungszone. Um eine Überhitzung der Abgase sicher zu vermeiden, können aber Teile dieser Restbrüden auch gemischt werden mit im Kreislauf geführten, gereinigten Abgasen vor Eintritt in den Kamin.

Die getrockneten Schlämme oder Rückstände mit hohem Anteil organischer Substanzen werden über ein Materialabscheider beispielsweise über ein Sieb klassiert. Zu grobkörnige Fraktionen werden gewünschtenfalls gemahlen und dabei auf die gewünschte Korngröße gebracht.

Für den Fall, daß zeitweilig nicht genügend geschreddertes Holz oder sonstige geeignete Holzabfälle zur Verfügung stehen, kann die Brennkammer auch beispielsweise mit Heizöl zusätzlich beheizt werden. Weiterhin wird Heizöl im allgemeinen für ein Zündfeuer benötigt. Im allgemeinen ist es aber möglich, im Dauerbetrieb auf den Einsatz von Heizöl ganz zu verzichten und den gesamten Energiebedarf durch Verbrennung von Holz und Holzabfällen zu decken.

Zur Reinigung der Abgase der Holzverbrennung wird vorzugsweise entstaubt und zusätzlich durch trockene Absorbentien gereinigt. Besonders geeignet sind Aktivkohle mit einem Zusatz von Calciumhydroxid. Diese Absorbentien können sowohl Düngemitteln als auch festen Brennstoffen zugemischt werden. Bei der Zumischung zu Düngemitteln ist allerdings darauf zu achten, daß diese Absorbentien nicht in unzulässiger Weise kontaminiert sind.

Das Kondensat weist bei Kühlung durch Luft im allgemeinen noch Temperaturen zwischen 40 und 70°C auf. Es kann daher vor der Einleitung ins Abwasser auch noch als warmes Brauchwasser eingesetzt werden.

Die Korngröße der erfindungsgemäß erhaltenen trockenen, rieselfähigen Produkte liegt vorzugsweise im Bereich zwischen 2 und 5 mm. Feinkorn unter 2 mm ist besonders gut geeignet, mit dem noch nicht getrockneten Schlamm vermischt zu werden, um dessen Trockensubstanzgehalt über 50 % zu bringen. Kornanteile von 2 bis 5 mm werden vorzugsweise gemahlen und dadurch auf den gewünschten Korndurchmesser gebracht, um in Staubfeuerungsanlagen verfeuert werden zu können.

Insgesamt ermöglicht somit das erfindungsgemäße Verfahren eine hervorragende stoffliche und zumindest energetische Verwertung sowohl von Schlämmen als auch von Holz und Holzabfällen, wobei Geruchsbelästigungen vermieden, Luftverschmutzung durch Abgase in den zugelassenen Grenzen liegt und darüber hinaus nur Abwasser als Kondensat anfällt, welche praktisch keine gelösten oder geruchsbelästigenden Verunreinigungen enthält. Die Energie zur Eintrocknung der Schlämme und Rückstände mit hohem Anteil organischer Substanzen wird aus Holz gewonnen, also einem regenerierbaren, nachwachsenden Rohstoff.

## Patentansprüche

1. Verfahren zur Verwertung von Schlämmen und wasserhaltigen Rückständen mit hohem Anteil organischer Substanzen durch Trocknung und Weiterverarbeitung zu trockenen, rieselfähigen Produkten sowie einem wäßrigen Kondensat, wobei ein Teil des getrockneten Produkts zurückgeführt wird, um die Trocknung bei Trockensubstanzwerten über 50 Gew.-% beginnen zu können, dadurch gekennzeichnet, daß die Trocknung durch indirekte Beheizung erfolgt und die Energie zur Trocknung überwiegend oder ausschließlich gewonnen wird durch Verbrennung von kontaminiertem und/oder nicht kontaminiertem Holz und/oder Holzabfällen in einer Brennkammer, wobei die Trocknung in einem geschlossenen System erfolgt und die Restbrüden der Trocknung in die Brennkammer hinter der Verbrennungszone eingeleitet werden.

2. Verfahren gemäß Anspruch 1, dadurch gekennzeichnet, daß das Holz und/oder die Holzabfälle geschreddert werden auf eine Kantenlänge von ca. 5 cm und in eine Unterschubfeuerung verbrannt werden.

3. Verfahren gemäß einem der Ansprüche 1 oder 2, dadurch gekennzeichnet, daß die Abgase der Verbrennung entstaubt und über trockene Absorbentien gereinigt werden.

4. Verfahren gemäß einem der Ansprüche 1 bis 3, dadurch gekennzeichnet, daß als Schlämme und wasserhaltige Rückstände nicht oder nur geringfügig kontaminierte Ausgangsmaterialien eingesetzt werden und die erhaltenen trockenen, rieselfähigen Produkte als Düngemittel verwertet werden.

5. Verfahren gemäß einem der Ansprüche 1 bis 3, dadurch gekennzeichnet, daß als Schlämme und wasserhaltige Rückstände kontaminierte Ausgangsmaterialien eingesetzt werden und die erhaltenen trockenen, rieselfähigen Produkte als Brennstoff verwertet werden.

6. Verfahren gemäß einem der Ansprüche 3 bis 5, dadurch gekennzeichnet, daß der Verbrennungsstaub und die verbrauchten trockenen Absorbentien dem trockenen, rieselfähigen Produkt beigemischt werden.
